# EUROPÄISCHE PATENTSCHRIFT

(11) **EP 0 759 195 B1**
(45) Veröffentlichungstag und Bekanntmachung des Hinweises auf die Patenterteilung: **16.09.1998**
(21) Anmeldenummer: 95916572.1
(22) Anmeldetag: 27.04.1995
(51) Int. Cl.: G05B 19/418

(54) **LEITSYSTEM FÜR EINE TECHNISCHE ANLAGE**
RUNNING SYSTEM FOR A TECHNICAL INSTALLATION
SYSTEME DE COMMANDE DESTINE A UNE INSTALLATION TECHNIQUE

(30) Priorität: 10.05.1994 DE 4416547
(43) Veröffentlichungstag der Anmeldung: 26.02.1997
(73) Patentinhaber: SIEMENS AKTIENGESELLSCHAFT, 80333 München (DE)
(72) Erfinder: SCHÖNTHAL, Hagen, D-76297 Stutensee (DE); FRITZ, Peter, D-76185 Karlsruhe (DE); KESSLER, Karl-Otto, D-67487 Maikammer (DE); WALZ, Horst, D-75534 Straubenhardt (DE)
(86) Internationale Anmeldenummer: DE9500569
(87) Internationale Veröffentlichungsnummer: WO9530937

(56) Entgegenhaltungen:
- EP-A- 0 162 670
- EP-A- 0 397 924
- EP-A- 0 434 986
- EP-A- 0 524 344
- EP-A- 0 531 653
- US-A- 4 819 149
- PROC. 1994 IEEE INTERNATIONAL CONF. ON ROBOTICS AND AUTOMATION, XP 000481180 E.J. NICOLSON 'Standardizing I/O for Mechatronic Systems using Real Time UNIX Device Drivers.'

## Beschreibung

Die Erfindung betrifft ein Leitsystem für eine technische Anlage mit einer Leitebene, die hierarchisch unter einer Betriebsführungsebene und hierarchisch oberhalb einer Automatisierungsebene angeordnet ist und mehrere Funktionsbausteine umfaßt, die entsprechend ihrer jeweiligen Funktion Eingangswerte verarbeiten und unter Berücksichtigung einer Anzahl von zu lösenden technischen Anwendungen untereinander verknüpft sind. Hierbei werden unter technischen Anlagen beispielsweise fossilbefeuerte oder nukleare Kraftwerksanlagen sowie Fertigungs- und Produktionsanlagen verstanden.

Bei einem derartigen, aus der EP-A 0 397 924 bekannten Leitsystem für eine Produktionsanlage sind die Funktionsbausteine in einer bestimmten Weise miteinander verdrahtet, die sich aus den fest vorgegebenen Teilfunktionen der Funktionsbausteine ergibt.

Bei einem aus der US-A-4 819 149 bekannten Leitsystem sind einem Host-Computer mehrere Subhost-Computer untergeordnet, wobei jedem Subhost-Computer wiederum jeweils eine Gruppe von mehreren Condensern untergeordnet ist. Dabei bedient jeder Subhost-Computer nur die ihm jeweils zugeordnete Condenser-Gruppe.

Aus der EP-A-0 443 986 ist ein Automatisierungssystem mit aus Baugruppenträgern bestehenden Peripheriegeräten bekannt, die jeweils Steckplätze für mehrere Baugruppen umfassen und an einer Steuerungseinheit angeschlossen sind. Beim Einstecken einer Baugruppe werden alle von ihr benötigten Daten durch die Steuerungseinheit übermittelt.

Aus der EP-A-0 524 344 ist schließlich eine konfigurierbare Werkzeugmaschinensteuerung bekannt, welche durch eine Vielzahl von Funktionsobjekten realisiert wird. Diese bestehen jeweils aus einem Prozedurteil und einem Kommunikationsteil und können zu einem oder mehreren Prozessen zusammengefaßt werden, wobei der Kommunikationsteil Botschaften zwischen dem Prozedurteil und anderen Funktionsobjekten vermitteln kann.

In einer Kraftwerksanlage sollen Überwachungseinrichtungen die aktuellen Betriebszustände der Anlage erkennbar machen und Abweichungen von einem Sollzustand melden. Dazu ist eine umfangreiche Meßwerterfassung der Betriebszustände aller Anlagenteile, eine umfangreiche und der Komplexität der Anlage gerecht werdende Meßwertbewertung und eine unter hoher Informationsverdichtung visualisiert aufbereitete Statusanzeige für die Betriebszustände der Anlagenteile erforderlich. Ein Leitsystem, das diese Aufgaben erfüllen soll, muß aufgrund der hohen Komplexität solcher technischer Anlagen einfach und geradlinig strukturiert sein. Dies bedeutet, daß nicht nur Anlagenteile mittels des Leitsystems überwachbar und einstellbar sind, sondern auch, daß neue und/oder überarbeitete und geänderte Kontroll-, Einstell- und/oder Auswerteoptionen in einfacher Weise in das bestehende Leitsystem und seine Architektur integrierbar sind.

Es ist daher Aufgabe der Erfindung ein Leitsystem, insbesondere ein rechnergestütztes Leitsystem, anzugeben, bei dem eine hohe Konfigurierbarkeit der die Meßwerte be- und auswertenden Leitebene innerhalb des Leitsystems gegeben ist.

Gemäß der Erfindung wird die Aufgabe dadurch gelöst, daß bei dem Leitsystem der eingangs angegebenen Art die Funktionsbausteine modular aufgebaut sind und jeweils einen beliebig projektierbaren Eingangsbereich, Funktionsbereich und Ausgangsbereich umfassen, daß die Funktionsbausteine über Datentransfermedien mit der Betriebsführungsebene, der Automatisierungsebene und untereinander verbunden sind und daß in den Funktionsbereichen die Funktion des jeweiligen Funktionsbaussteins und in den Eingangsbereichen und Ausgangsbereichen die Verknüpfung des jeweiligen Funktionsbausteins mit anderen Funktionsbausteinen entsprechend der zu lösenden technischen Anwendung festlegbar ist.

Damit ist eine nahezu beliebige Strukturierbarkeit und grafische Konfigurierbarkeit des Leitsystems in der Leitebene gegeben, wobei wegen der beliebigen Projektierbarkeit der Funktionsbausteine bezüglich ihres Eingangsbereichs, ihres Ausgangsbereichs und ihres Funktionsbereichs jederzeit Funktionsbausteine modifiziert, ergänzt, weggenommen oder neu verknüpft werden können, um eine zu lösende technische Anwendung, wie z. B. die Prozeßführung bestimmter Anlagenteile, die Prozeßinformation, die Kenngrößenberechnung oder die Bilanzierung durchführen zu können. Die dabei verwendeten Eingangswerte können die unmittelbar von der Automatisierungsebene erhaltenen Meßwerte, bereits mit einer Zugehörigkeitsfunktion bewertete Meßwerte, Zwischenresultate anderer Funktionsbausteine und über die Betriebsführungsebene vorgebbare projektierbare Parameter sein.

Bei einem solchen, meist rechnergestützten Leitsystem ist es wünschenswert, wenn die Leitebene und die mit der Leitebene verbundenen Ebenen innerhalb einer gemeinsamen Systemumgebung geführt sind. Hierzu ist es zweckmäßig, wenn ein Betriebssystem, vorzugsweise ein handelsübliches Betriebsystem, wie z. B. UNIX oder OS 2, vorgesehen ist, daß die Betriebsführungsebene, Leitebene und die Automatisierungsebene sowie einen Datentransfer zwischen diesen Ebenen unterhält. Solche Betriebssysteme unterstützen auch die freie Verknüpfbarkeit der in der Leitebene angeordneten Funktionsbausteine. Außerdem ist auf diese Weise eine weitgehende Unabhängigkeit des Leitsystems von der Innovationsgeschwindigkeit der Rechner-Hardware erreicht.

Um den Eingangsbereich besonders einfach konfigurierbar zu gestalten, ist es zweckmäßig, wenn für den Eingangsbereich ein Datentyp, ein Verbindungstyp und eine Versorgungsart festlegbar sind. Entsprechend können für den Ausgangsbereich ein Datentyp, ein Verbindungstyp und eine Entsorgungsart festlegbar sein.

Unter dem Stichwort "Datentyp" wird festgelegt, von welcher Art die den Funktionsbaustein erreichenden oder verlassenden Daten sind. Diese können vom Charakter her z. B. Real-Werte (reelle Zahlen), Integer-Werte (ganzzahlige Zahlen), Boolean-Werte (Wahr/Falsch-Aussagen) oder String (Zeichenketten) sein, die auch in beliebiger, aber festlegbarer Reihenfolge als Datenblock oder Datensatz übertragen werden können.

Unter dem Stichwort "Verbindungstyp" wird die Verbindung des Funktionsbausteins zu anderen Funktionsbausteinen festgelegt. Die Verbindung kann im einzelnen in einer Ringverbindung oder einer Warteschlangenverbindung oder einer Auftragsverbindung oder einer Datenbehälterverbindung bestehen. Durch den Verbindungstyp ist indirekt der Puffermechanismus festgelegt. Beispielsweise wird bei einer Ringverbindung in einem Umlaufpuffer eine konfigurierbare Anzahl von Werten aus unterschiedlichen Funktionsdurchläufen gespeichert.

Unter dem Stichwort "Versorgungsart" und "Entsorgungsart" wird verstanden, daß ein Eingang explizit versorgt bzw. ein Ausgang explizit entsorgt wird, wenn der Funktionsbaustein explizit (auch beliebig oft) die Datenaufnahme bzw. Datenausgabe bei der Ausführung der Funktion initiiert. Eine implizite Versorgungs- oder Entsorgungsart liegt dann vor, wenn festgelegt worden ist, daß der Funktionsbaustein grundsätzlich vor Ausführung seiner Funktion Daten zur Verfügung hat bzw. grundsätzlich nach Funktionsausführung Daten ausgibt, ohne daß es hierzu einer zusätzlichen Maßnahme bedarf.

Aufgrund dieser vorgenannten Möglichkeiten der Festlegung von Eingangs- und/oder Ausgangsbereich ist gewährleistet, daß der Ein- und/oder Ausgangsbereich beliebig, aber mit fest vorgegebenen Mitteln an die zu lösende technische Anwendung anpaßbar ist. Dies gewährleistet einen für alle Funktionsbausteine einheitlichen und damit sicheren Datenaustausch und eine für alle Funktionsbausteine einheitliche und sichere Datenhaltung.

In vorteilhafter Ausgestaltung der Erfindung kann der Funktionsbereich ein Bausteinprogramm, beispielsweise ein in einer beliebigen Programmiersprache erstelltes Programm, enthalten, das entsprechend der zu lösenden technischen Anwendung mindestens einen aus mindestens einer logischen und/oder mindestens arithmetischen Funktion bestehenden Funktionssatz umfaßt. Auf diese Weise kann der technische Experte sein spezielles technologisches Wissen programmieren, ohne daß er seinen Algorithmus (Funktionssatz) selbst in das Leitsystem einbinden muß. Dies wird ihm von der standardisierten Umgebung, insbesondere durch den projektierbaren Eingangs- und Ausgangsbereich der Funktionsbausteine, abgenommen. Desweiteren können dem Technologen bereits vorgefertigte logische Operationen, wie z. B. AND-, OR-, XOR- und NOR-Verknüpfungen, und arithmetische Funktionen, wie z. B. Differentiation, Mittelwertbildung und Integration, bereitstehen, so daß ein Funktionssatz teils durch Strukturierung und teils durch Programmierung entsteht.

Weitere vorteilhafte Ausgestaltungen der Erfindung sind den übrigen Unteransprüchen zu entnehmen.

Ausführungsbeispiele der Erfindung werden anhand einer Zeichnung näher erläutert. Dabei zeigen:
- Figur 1: einen schematischen Aufbau eines Leitsystems und einer mittels dieses Leitsystems geführten GuD-Anlage;
- Figur 2: einen Funktionsbaustein; und
- Figur 3: in schematischer Darstellung eine Reihenfolge der Funktionsausführung von mehreren Funktionsbausteinen gemäß Figur 2.

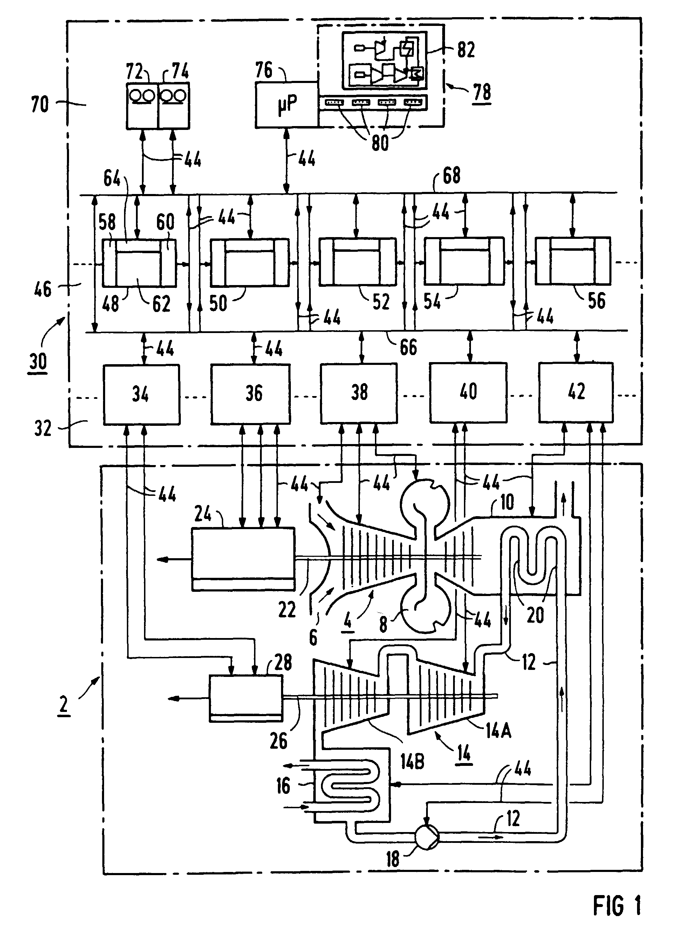

Eine in Figur 1 schematisch dargestellte Gas- und Dampfturbinen-Anlage 2 (GuD-Anlage) umfaßt eine Gasturbine 4 mit Lufteinlässen 6 und Brennkammern 8 und einen an die Gasturbine 4 angeschlossenen Dampferzeuger 10. Ein zu einer Dampfturbine 14 zugehöriger Wasser-Dampfkreislauf 12 umfaßt der Reihe nach ein Hochdruckteil 14a der Dampfturbine 14, einen Mitteldruckteil 14b der Dampfturbine 14, einen Kondensator 16, eine Wasserpumpe 18 und im Dampferzeuger 10 angeordnete Wärmetauscherrohre 20. Mittels einer von der Gasturbine 4 angetriebenen Welle 22 wird ein Generator 24 angetrieben. Mittels einer von der Dampfturbine 14 angetriebenen Welle 26 wird ein weiterer Generator 28 angetrieben.

In der zeichnerischen Darstellung darüberliegend ist ein Leitsystem 30 schematisch dargestellt. Dieses Leitsystem 30 enthält in einer Automatisierungsebene 32 Automatisierungsbausteine 34 bis 42. Diese Automatisierungsbausteine 34 bis 42 koppeln über bidirektionale Datenleitungen 44 direkt an Anlagenteile der GuD-Anlage 2 an. So ist beispielsweise der Automatisierungsbaustein 34 mit dem Generator 28 verbunden und überwacht die Temperatur des Generators 28, mißt dessen elektrische Leistung und stellt den Wasserstoffkühlkreislauf des Generators 28 ein. Weiterhin kann dieser Automatisierungsbaustein 34 beispielsweise eine automatische Wasserstoffleckageprüfung des Kühlkreislaufes durchführen.

Der Automatisierungsbaustein 36 ist dem Generator 24 zugeordnet und nimmt etwa die gleichen Aufgaben war, die der Automatisierungsbaustein 34 bezüglich des Generators 28 wahrnimmt.

Der Automatisierungsbaustein 38 ist der Gasturbine 4 zugeordnet und überwacht eine Vielzahl von Prozeßparametern und/oder stellt diese ein. Dies sind beispielsweise die Luftmengen und Lufttemperaturen an den Lufteinlässen 6, die Turbinendrehzahl, die Temperatur in der Brennkammer 8, die Brennstoffzuführung usw.

Der Automatisierungsbaustein 40 ist der Dampfturbine 14 zugeordnet, überwacht die Dampfturbine 14 und stellt die für den Betrieb der Dampfturbine 14 relevanten Parameter, wie z. B. Temperatur der Gasturbine 4, Drehzahl usw., ein.

Der Automatisierungsbaustein 42 ist dem Wasser-Dampfkreislauf 12 zugeordnet und überwacht ihn und stellt die Kühlleistung des Kondensators 16, die Pumpleistung der Wasserpumpe 18, den Dampfdruck usw. ein.

Hierarchisch oberhalb der Automatisierungsebene 32 ist eine Leitebene 46 angeordnet, die modular aufgebaut ist und Funktionsbausteine 48 bis 56 umfaßt. Die Funktionsbausteine 48 bis 56 selbst sind auch modular aufgebaut und umfassen jeweils einen Eingangsbereich 58, einen Ausgangsbereich 60, einen Funktionsbereich 62 und eine Serviceschnittstelle 64. Eingangs- und ausgangsseitig sind die Funktionsbausteine 48 bis 56 mit bidirektionalen Datenleitungen 44 sowohl mit einem Datentransfermedium 66 verbunden, an dem auch die Automatisierungsbausteine 34 bis 42 über bidirektionale Datenleitungen 44 angeschlossen sind, als auch mit einem weiteren Datentransfermedium 68 verbunden, das eine Verbindung zu einer Betriebsführungsebene 70 herstellt.

In dieser hierarchisch oberhalb der Leitebene 46 angeordneten Betriebsführungsebene 70 sind im Ausführungsbeispiel Datenspeicher 72, 74 und ein Leitrechner 76 mit daran angekoppelter Benutzeroberfläche 78 vorgesehen. Die Benutzeroberfläche 78 umfaßt mehrere Terminals 80 und eine Großbildwand 82. Von hier aus ist es dem Anlagenbetreiber gestattet, in den weitgehend automatisierten Ablauf der GuD-Anlage 2 einzugreifen. Hierzu liefert ihm die Großbildwand 82 ein statisches und dynamisches Abbild des Anlagenprozesses.

Beim Betrieb der GuD-Anlage 2 werden die einzelnen Anlagenteile, z. B. die Generatoren 24, 28, die Turbinen 4, 14, der Wasser-Dampfkreislauf 12, weitgehend automatisch von den Automatisierungsbausteinen 34 bis 42 überwacht und eingestellt. Zum Betrieb der GuD-Anlage 2 besonders relevante Daten, wie z. B. auch die Daten für die Großbildwand 82, auf der ein Abbild des technischen Prozesses sowie seines momentanen Betriebszustandes abgebildet ist, werden über die bidirektionalen Datenleitungen 44 an das Datentransfermedium 66 ausgegeben und von dort aus weiterverarbeitet. Jeder der Automatisierungsbausteine 34 bis 42 beinhaltet eine klar umrissene Funktion und löst eine für sich abgeschlossene Aufgabe. Eine über den jeweiligen Automatisierungsbaustein 34 bis 42 hinausgehende Funktion zur Lösung einer technischen Anwendung, die über den jeweils zu überwachenden und/oder einzustellenden Anlagenteil hinausgeht, ist in der Automatisierungsebene nicht erreichbar.

Erst die hierarchisch darüberliegende Leitebene 46 ist autosisiert, technische Anwendungen, wie z. B. die Prozeßführung oder Prozeßinformation, die Kenngrößenberechnung und die Bilanzierung, durchzuführen. Aufgrund des modularen Aufbaus dieser Leitebene 46 ist es besonders einfach, diese Anwendungen zu lösen. Mit Hilfe des zugrundeliegenden technologischen Wissens über die GuD-Anlage 2 und über das Zusammenwirken ihrer Anlagenteile sind die Funktionsbausteine 48 bis 56 speziell für eine zu lösende technische Anwendung zu ertüchtigen. Das eigentliche technologische Wissen beinhaltet im wesentlichen einen Algorithmus (Funktionssatz), der von einem Experten aufgestellt worden ist. Entsprechend der zu lösenden technischen Anwendung können die Funktionsbausteine 48 bis 56 beliebig verknüpft werden, wodurch mit einer solchen Leitebene 46 beliebig komplexe, technische Anwendungen nicht durch zeitaufwendige Programmierung, sondern durch geeignete und übersichtliche Strukturierung lösbar sind. So können beispielsweise aus dem Kesselwirkungsgrad, der von einem bestimmten Funktionsbaustein ermittelt wird, und aus den Brennstoffparametern, die beispielsweise über die Benutzeroberfläche 78 vorgebbar sind, Lebensdauerberechnungen für Kesselbauteile erstellt werden. Ebenso kann anhand einer Verknüpfung von Betriebsparametern der Gasturbine 4 und der in der Gasturbine 4 eingesetzten Werkstoffe und der chemischen Zusammensetzung des Brennstoffs eine Aussage über die Lebensdauer von Turbinenbauteilen getroffen werden. Eine Verknüpfung der Funktionsbausteine 48 bis 56 ist auch erforderlich, wenn Bilanzierungsrechnungen durchgeführt werden sollen.

Weil die Funktionsbausteine 48 bis 56 bezüglich ihres Eingangsbereichs 58, ihres Ausgangsbereichs 60 und ihres Funktionsbereichs 62 beliebig projektierbar sind, werden dem Anlagenbetreiber erhebliche Freiräume zur Anpassung seines Leitsystems 30 an die zum Teil sehr komplexen Begebenheiten, z. B. wie hier in der GuD-Anlage 2, bereitgestellt.

Die von den Funktionsbausteinen 48 bis 56 ermittelten Ergebnisse, die zum Betrieb der technischen Anlage 2 relevant sind, werden an das Datentransfermedium 68 ausgegeben, im Datenspeicher 72 gespeichert und vom Leitrechner 76 zur Abbildung des momentanen Prozesses weiterverarbeitet.

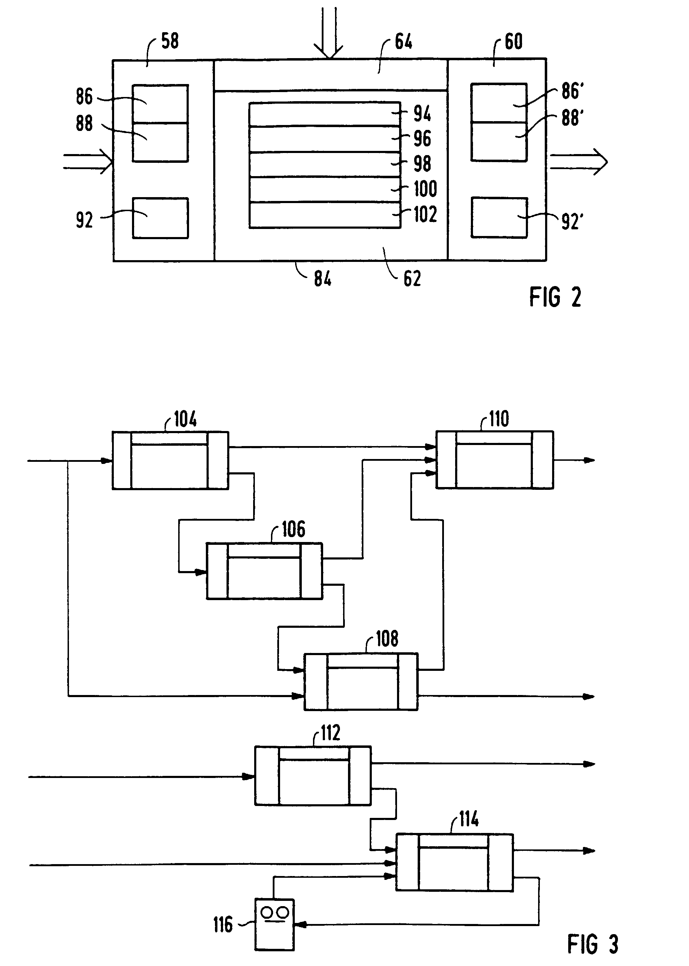

Der Leitrechner 76 stellt ein Betriebssystem bereit, mittels dessen die Betriebsführungsebene 70, die Leitebene 46 und die Automatisierungsebene 23 sowie ein Datentransfer zwischen diesen Ebenen unterhalten wird. Dies ist im Ausführungsbeispiel UNIX. In dieses Betriebssystem sind auch die Funktionsbausteine 48 bis 56 eingegliedert, so daß auf diese Weise ein Bearbeitungstyp eines jeden Funktionsbausteins 48 bis 56 vorgebbar ist und der Ablauf der Funktionsbausteine 48 bis 56 steuerbar ist. Dies wird nachfolgend noch näher zu den Figuren 2 und 3 erläutert. Ebenso werden die Eigenschaften der Funktionsbausteine 48 und 56 sowie deren Zusammenwirkung in einer Bearbeitungsfolge noch näher anhand der Figur 2 bzw. 3 erläutert.

Die Figur 2 stellt prinzipiell den Aufbau eines Funktionsbausteins 84 dar. Dieser Aufbau ist mit dem Aufbau der Funktionsbausteine 48 bis 56 der Figur 1 identisch. Der Funktionsbaustein 84 weist ebenso wie die Funktionsbausteine 48 bis 56 einen Eingangsbereich 58, einen Ausgangsbereich 60, einen Funktionsbereich 62 und eine Serviceschnittstelle 64 auf. Aufgrund des modularen Aufbaus des Funktionsbausteins 84 gibt sich eine freie Projektierbarkeit der Bereiche 58, 60, 62, wodurch die eigentliche Funktion des Funktionsbausteins und die Verknüpfung dieses Bausteins mit anderen Funktionsbausteinen entsprechend der zu lösenden technischen Anwendung festlegbar ist.

Die einzelnen in den Bereichen 58, 60, 62 projektierbaren Eigenschaften sind als rechteckige Kästchen symbolisiert.

Für den Eingangsbereich 58 (nachfolgend auch als Eingang bezeichnet) sind ein Datentyp 86, ein Verbindungstyp 88 und eine Versorgungsart 92 festlegbar. Ähnlich stellt sich die Situation für den Ausgangsbereich 60 dar. Hier sind ebenfalls ein Datentyp 86', ein Verbindungstyp 88' sowie eine Entsorgungsart 92' festlegbar.

Der Datentyp 86 beschreibt die Struktur der Daten, die der Funktionsbaustein 84 an diesem Eingang erwartet. Prinzipiell ist jeder denkbare Datentyp zulässig. Jedoch kann es die breite Einsatzfähigkeit der Funktionsbausteine erfordern, daß eine Beschränkung auf möglichst wenige standardisierte Datentypen, wie "Real-Werte", "Integer-Werte", "Boolean-Werte" und "String-Variablen" vorgenommen wird.

Der Verbindungstyp 88 legt fest, mit welchen Verbindungen ein Eingang 58 verknüpft werden kann. Im Ausführungsbeispiel wird zwischen folgenden Verbindungstypen unterschieden: Ring, Warteschlange, Auftrag und Datenbehälter. Zum Einlesen von Daten über eine Ringverbindung kann eine Servicefunktion der Serviceschnittstelle 64, z. B. unter dem Namen "import" aufrufbar, benutzt werden. Der Zeitpunkt des Aufrufs kann frei bestimmt werden; im Unterschied zu Eingängen aller anderen Verbindungstypen kann der Ringeingang parametriert werden, d. h., daß ein beim ersten Lesevorgang eingelesener Wert vorgebbar ist. Eine Ringverbindung kennt als Versorgungsart 92 zwei Funktionen. Zum einen kann der Eingang explizit versorgt werden, d. h. der Funktionsbaustein 84 ruft mit einer Servicefunktion zu einem vorgebbaren Zeitpunkt explizit die gewünschten Daten ab. Zum anderen und alternativ dazu bedeutet die implizite Versorgungsart, daß der Funktionsbaustein 84 unmittelbar vor Funktionsausführung den vorgebbaren Datensatz an seinem Eingang 58 zur Verfügung hat.

Bei der Warteschlangenverbindung benutzt der Funktionsbaustein 84 zum Einlesen wieder die Bedienfunktion "import"; im Unterschied zu der Ringverbindung kann es jedoch vorkommen, daß kein Datensatz anliegt und damit kein Datensatz eingelesen wird. Der Aufruf der Bedienfunktion wird in diesem Fall negativ quittiert. Die Warteschlangenverbindung kennt nur die explizite Versorgungsart.

Eine Auftragsverbindung liegt dann vor, wenn der Funktionsbaustein 84 von anderen Funktionsbausteinen erteilte Aufträge bearbeiten kann. Eine Auftragsverbindung ist immer bidirektional und besitzt einen "Client-Server"-Charakter. Die Auftragsverbindung kennt nur die explizite Versorgungsart.

Eine Datenbehälter-Verbindung liegt dann vor, wenn das Einlesen von Datensätzen im Unterschied zu den Eigenschaften anderer Verbindungstypen nicht über den intern vorgegebenen Datenpuffer erfolgt. Vielmehr findet der Funktionsbaustein 84 dort Adressinformationen vor, mit denen der Funktionsbaustein 84 auf den Inhalt des mit dem Funktionsbaustein 84 verknüpften internen oder externen Datenbehälters, z.B. der Datenspeicher 72, 74, zugreifen kann.

Auf diese Weise ist für den Eingangsbereich 58 eine universelle Verknüpfbarkeit mit den Ausgangsbereichen 60 anderer Funktionsbausteine und eine hohe Datensicherheit beim Datentransfer gewährleistetet.

Bezüglich des Ausgangsbereichs 60 wird in zum Eingangsbereich 58 vergleichbarer Weise verfahren. Ein Datentyp 86' kann in zum Datentyp 86 vergleichbarer Weise festgelegt werden. Ein Verbindungstyp 88' hat die Option Datenübertragung und Auftrag. Im Unterschied zum Eingangsbereich 58 wird hier jedoch nicht mit der Servicefunktion "import" ein Datensatz eingelesen, sondern ein Datensatz ausgegeben, wozu auf eine andere Bedienfunktion zurückgegriffen wird, die z.B. unter dem Namen "export" aufrufbar ist. Weiter sei angemerkt, daß eine Ringverbindung beliebig viele Leser haben kann, jedoch nur einen oder gar keinen Schreiber hat. Im letztgenannten Fall ist sie dann parametriert.

Bei einer im Verbindungstyp 88' festgelegten Ringverbindung wird entweder immer nur ein Datensatz, und zwar der aktuelle, gehalten oder auf den aktuellen und den nächst älteren oder auf den aktuellen und vorgebbar viele ältere Datensätze zurückgegriffen.

Ebenso wie der Eingangsbereich 58 explizit oder implizit versorgt werden kann, kann für den Ausgangsbereich 60 ein Entsorgungstyp 92' festgelegt werden. Ein Ausgang kann explizit oder implizit entsorgt werden, d. h. bei expliziter Entsorgung wird von dem Baustein 84 zu einer festlegbaren Zeit ein Datensatz ausgegeben, bei einer impliziten Entsorgung hingegen wird ein Datensatz unmittelbar nach Ausführung der Funktion des Funktionsbausteins 84 ausgegeben.

Der Funktionsbereich 62 des Bausteins 84 umfaßt ein Bausteinprogramm, in dem die eigentliche Funktion des Funktionsbausteins 84 festgelegt ist. Mögliche Funktionen sind arithmetische Funktionen, wie beispielsweise Integration, Differentiation, Mittelwertbildung, statistische Funktionen und Prognosefunktionen, aber auch logische Funktionen, wie z. B. AND-, OR-, NOR- und XOR-Verknüpfungen. Entsprechend der zu lösenden technischen Anwendung werden diese Funktionen und Verknüpfungen zu einem Funktionssatz zusammengefaßt, der folglich mindestens eine arithmetische Operation und/oder mindestens eine logische Operation beinhaltet.

Einem Bearbeitungstyp 94 bis 102 entsprechend kann ein Bausteinprogramm mehrere Funktionssätze umfassen, die Unterprogramme des Bausteinprogramms sind. Die Bearbeitungstypen 94 bis 102 stehen jeweils für einen Status, den die Funktionsausführung des Funktionsbausteins 84 hat.

So ist beispielsweise der Funktionssatz des Bearbeitungstyps 94 dem Erstlauf des Funktionsbausteins 84 zugeordnet. Entsprechend ist der Funktionssatz des Bearbeitungstyps 96 dem Normallauf und der Funktionssatz des Bearbeitungstyps 98 dem Endlauf des Bausteins zugeordnet. Der Funktionssatz des Bearbeitungstyps 100 repräsentiert den Neustartlauf des Funktionsbausteins 84 und der Funktionssatz des Bearbeitungstyps 102 steht für einen Projektierungslauf.

Der jeweils während des laufenden Prozesses erforderliche Bearbeitungstyp ist mittels des Betriebssystems, d.h. beispielsweise auslösbar durch einen Operator in der Leitwarte 78, über die Serviceschnittstelle 64 vorgebbar. Beim Anfahren der GuD-Anlage 2 beispielsweise kann für alle Funktionsbausteine der Bearbeitungstyp Erstlauf vorgegeben sein. Funktionsbausteine, die eine sich zeitlich wiederholende Funktion ausführen, wie z.B. eine Stunden-, Tages- oder Monatsstatistik, führen entsprechend des vorgegebenen Zeitintervalls eine Bausteinbearbeitung durch. Diese Ablaufsteuerung ist - wie bereits erwähnt - beliebig vorgebbar und wird über das Betriebssystem an die Funktionsbausteine 48 bis 56, 84 ausgegeben. Als Startbedingungen können zyklische, sporadische Ereignisse, aber auch eine Kombination von zyklischen und sporadischen Ereignissen vorgegeben werden; ebenso kann ein absoluter Zeitpunkt, wie z.B. Monats- oder Jahresende, vorgegeben werden.

Die Ablaufsteuerung wird über die Serviceschnittstelle 64, aktiviert durch Aufrufe des Betriebssystems, abgewickelt, die den Kontakt des Funktionsbausteins 84 mit dem Betriebssystem herstellt. Weiter können in der Serviceschnittstelle 64 die Bedienfunktionen, wie z.B. "import" und "export", bereitgestellt sein, die der Funktionsbaustein 85 benötigt, um Datensätze aus dem vorgegebenen Verbindungstyp 88 auszulesen oder in den vorgegebenen Verbindungstyp 88' zu schreiben.

In Figur 3 ist schematisch dargestellt, in welcher Weise eine Anzahl von Funktionsbausteinen 104 bis 110, die ihre Funktion nicht unabhängig von einander ausführen, zu einer Bearbeitungsfolge zusammengefaßt sind.

So liest beispielsweise der Funktionsbaustein 104 Datensätze ein, die der zu bestimmten Zeitpunkten gemessenen chemischen Zusammensetzung des Abgases der Gasturbine 4 entsprechen. Die Funktion des Funktionsbausteins 104 besteht nun darin, Tagesmittelwerte der Konzentration von im Gasturbinenabgas enthaltenen Schadstoffen zu bestimmen. Ein daran anschließend ablaufender Funktionsbaustein 106 liest aus einer Ringverbindung den Tagesmittelwert für die Stickoxidkonzentration ein und berechnet daraus die am Tag zur katalytischen Umsetzung der Stickoxide in einer hier nicht weiter dargestellten De-NO_{X}-Anlage verbrauchte Ammoniakmenge. Weiter kann der Funktionsbaustein 106 einen Vergleich von errechneter und tatsächlicher verbrauchter Ammoniakmenge durchführen.

Nach dieser Berechnung gibt der Funktionsbaustein 106 das Ergebnis, die bestimmte Tagesammoniakmenge, in eine Ringverbindung aus. Mit dieser Ausgabe wird die Funktion eines Funktionsbausteins 108 aktiviert, der ebenfalls die den Funktionsbaustein 104 zur Verfügung stehenden Eingangsdaten und die Tagesammoniakmenge aus einer Ringverbindung einliest. Aus der Tagesammoniakmenge, aus der mittleren Tagesstickoxidkonzentration und aus der Temperaturverteilung des Gasturbinenabgases über einen Tag wird ein Alterungswert für die in der De-NOₓ-Anlage eingesetzten Katalysatoren bestimmt. Dieses Ergebnis wird in eine Ringverbindung ausgegeben und Funktionsbaustein 110 kann seine Funktion aufnehmen. Dieser liest nun aus der Ringverbindung die Ergebnisse der Funktionsbausteine 104 bis 108 und bilanziert daraus die Tageskosten, die dem Betreiber der GuD-Anlage 2 für die Rauchgasreinigung entstanden sind. Aufgrund des modularen Aufbaus der Leitebene 46 können weitere Features, die dem Gesamtkomplex Abgasreinigung zuzuordnen sind, problemlos in das bestehende Leitsystem 30 eingebunden werden.

Alternativ ist es auch möglich, diese Bearbeitungsfolge umzukehren. So kann beispielsweise der Funktionsbaustein 110, der die Bilanzierung durchführt, gestartet werden und im Rahmen von Auftragsverbindungen die Bausteine 104 bis 108 starten, auf deren Ergebnisse warten und nach Erhalt dieser Ergebnisse seine Bilanzierungsrechnungen ausführen und die Ergebnisse ausgeben, z. B. direkt an die Benutzeroberfläche 78 in der Betriebsführungsebene 70. Ebenso können diese Ergebnisse beispielsweise im Speicher 74, der als Langzeitspeicher ausgebildet sein kann, abgelegt werden.

Funktionsbausteine 112 und 114, die von der in der zeichnerischen Darstellung darüber abgebildeten Bearbeitungsfolge unabhängig sind, können ihre Funktion auch unabhängig von dieser Bearbeitungsfolge gleichzeitig oder aber auch zu einem beliebigen anderen vorgebbaren Zeitpunkt ausführen. So kann der Funktionsbaustein 112 beispielsweise vorgebbar oft, z. B. minütlich, das abgetastete Laufgeräusch der Gasturbine 4 einlesen und dieses zeitlich abgetastete Laufgeräusch mittels einer FFT (Fast-Fourrier-Transformation) in ein Frequenzspektrum des Laufgeräusches umrechnen und dieses Spektrum als Datensatz in eine Ringverbindung ausgeben. Dieses Spektrum liest der Funktionsbaustein 114 ein, lädt über eine Ringverbindung beispielsweise eines der vorgehenden Laufgeräuschspektren und lädt über eine Auftrags- oder Datenbehälterverbindung beispielsweise das Laufgeräuschspektrum der neuen, unbenutzten Gasturbine 4 aus einem externen Datenspeicher 116.

Als Ergebnis gibt der Funktionsbaustein 114, der beispielsweise eine mit einer Alarmkompetenz versehenen Autorität besitzt, ein bewertetes Ergebnis aus, das sich aus einem Vergleich des aktuellen Laufgeräuschspektrums und des Spektrums der neuen unbenutzten Gasturbine ergeben hat. Zeigt dieser Vergleich signifikante Veranderungenen, d.h. sind im Spektrum signifikante Oberwellen aufgetreten, können detaillierte Aussagen über die verbleibende Restlaufzeit der Gasturbine 4 bis zu einem nächsten Wartungstermin angegeben werden. Besonders störungsbehaftete Geräuschspektren, die beispielsweise bedingen, daß ein geplanter Wartungstermin vorgezogen werden muß, weil ansonsten die Gefahr eines Turbinenflügelschadens besteht, können über eine Auftrags- oder Datenbehälterverbindung an den Datenspeicher 116 ausgegeben werden und dort zu einem späteren Zeitpunkt zu Anlayse- und Simulationszwecken wieder ausgelesen werden.

Aufgrund des vorstehend beschriebenen modularen Aufbaus der Leitebene 46 mit beliebig verknüpfbaren Funktionsbausteinen 48 bis 56, 84, 104 bis 114, die ihrerseits hier modular aufgebaut sind, ist es möglich, sämtliche Überwachungs- und Steuerungsvorgänge sowie umfassende Informationsbedürfnisse über den Betriebszustand der GuD-Anlage 2 umzusetzen und deren Lösung auf kleine überschaubare Einheiten, sprich Funktionsbausteine, aufzuteilen. Aufgrund der vorgebbaren Systemarchitektur und des vorgebbaren Betriebssystems kann daher das technologische Wissen über die technische Anlage, hier die GuD-Anlage 2, in beliebiger Weise in überschaubare, für sich strukturierbare Funktionsbausteine aufgeteilt werden, und eine technische Anwendung, wie z. B. die Bilanzierung, durch geeignete Verknüpfung (Strukturierung) der Funktionsbausteine gelöst werden.

## Patentansprüche

1. Leitsystem (30) für eine technische Anlage (2) mit einer Leitebene (46), die hierarchisch unter einer Betriebsführungsebene (70) und hierarchisch oberhalb einer Automatisierungsebene (32) angeordnet ist und mehrere Funktionsbausteine (48 bis 56, 84, 104 bis 114) umfaßt, die entsprechend ihrer jeweiligen Funktion Eingangswerte verarbeiten und unter Berücksichtigung einer Anzahl von zu lösenden technischen Anwendungen untereinander verknüpft sind, **dadurch gekennzeichnet,**
- daß die Funktionsbausteine (48 bis 56, 84, 104 bis 114) modular aufgebaut sind und jeweils einen beliebig projektierbaren Eingangsbereich (58), Funktionsbereich (62) und Ausgangsbereich (60) umfassen,
- daß die Funktionsbausteine (48 bis 56, 84, 104 bis 114) über Datentransfermedien (66, 68) mit der Betriebsführungsebene (70), der Automatisierungsebene (32) und untereinander verbunden sind und
- daß in den Funktionsbereichen (62) die Funktion des jeweiligen Funktionsbausteins (48 bis 56, 84, 104 bis 114) und in den Eingangsbereichen (58) und Ausgangsbereichen (60) die Verknüpfung des jeweiligen Funktionsbausteins (48 bis 56, 84, 104 bis 114) mit anderen Funktionsbausteinen (48 bis 56, 84, 104 bis 114) entsprechend der zu lösenden technischen Anwendung festlegbar ist.

2. Leitsystem nach Anspruch 1,
**dadurch gekennzeichnet,** daß
ein Betriebssystem vorgesehen ist, das die Betriebsführungsebene (70), die Leitebene (46) und die Automatisierungsebene (32) sowie einen Datentransfer zwischen diesen Ebenen (32, 46, 70) unterstützt,

3. Leitsystem nach Anspruch 1 oder 2,
**dadurch gekennzeichnet,** daß
für den Eingangsbereich (58) ein Datentyp (86), ein Verbindungstyp (88) und eine Versorgungsart (92) festlegbar sind.

4. Leitsystem nach Anspruch 3,
**dadurch gekennzeichnet,** daß
für den Ausgangsbereich (60) ein Datentyp (86'), ein Verbindungstyp (88'), ein Puffertyp (90') und eine Entsorgungsart (92') festlegbar sind.

5. Leitsystem nach einem der Ansprüche 3 und 4,
**dadurch gekennzeichnet,** daß
der Funktionsbereich (62) ein Bausteinprogramm enthält, das entsprechend der zu lösenden technischen Anwendung mindestens einen aus mindestens einer logischen und/oder mindestens einer arithmetrischen Funktion bestehenden Funktionssatz umfaßt.

6. Leitsystem nach Anspruch 5
**dadurch gekennzeichnet,** daß
die Funktionssatze Unterprogramme des Bausteinprogramms sind, die jeweils einem Bearbeitungstyp (94 bis 102) zugeordnet sind.

7. Leitsystem nach Anspruch 6,
**dadurch gekennzeichnet,** daß
der Bearbeitungstyp (94 bis 102) funktionsbaustein-unabhängig mittels des Betriebssystems vorgebbar ist.

8. Leitsystem nach einem der Ansprüche 2 bis 7,
**dadurch gekennzeichnet,** daß
die Funktionsbausteine (48 bis 56, 84, 104 bis 114) jeweils eine Serviceschnittstelle (64) mit Bedienfunktionen umfassen, die eine Verbindung des Funktionsbausteins (48 bis 56, 84, 104 bis 114) mit dem Betriebssystem herstellt.

9. Leitsystem nach einem der Ansprüche 1 bis 8,
**dadurch gekennzeichnet,** daß
Funktionsbausteine (104 bis 110) zu einer Bearbeitungsfolge zusammenfaßbar sind, wobei die Reihenfolge ihrer Funktionsausführung entsprechend der zu lösenden Aufgabe vorgebbar ist.

10. Leitsystem nach Anspruch 9,
**dadurch gekennzeichnet,** daß
die Funktionsausführung von Funktionsbausteinen (112, 114), die nicht zu einer Bearbeitungsfolge gehören, unabhängig ausführbar ist.

11. Leitsystem nach einem der Ansprüche 1 bis 10,
**dadurch gekennzeichnet,** daß
mittels des Betriebssystems der Ablauf der Funktionsbausteine (48 bis 56, 84, 104 bis 114) steuerbar ist.

12. Leitsystem nach einem der Ansprüche 1 bis 11,
**dadurch gekennzeichnet,** daß
in der Betriebsführungsebene (70) eine Benutzeroberfläche (78) vorgesehen ist, die betriebsrelevante Daten der technischen Anlage (2) anzeigt und mittels der der Betriebszustand der technischen Anlage (2) einstellbar ist.

13. Leitsystem nach einem der Ansprüche 1 bis 12,
**dadurch gekennzeichnet,** daß
in der Automatisierungsebene (32) Automatisierungsbausteine (34 bis 42) vorgesehen sind, die bestimmten Anlagenteilen (4, 12, 14, 24, 28) zuweisbar sind.

## Claims

1. Control system (30) for a technical installation (2), having a control level (46), which is arranged hierarchically below a system management level (70) and hierarchically above an automation level (32) and comprises a plurality of function blocks (48 to 56, 84, 104 to 114), which process input values in accordance with their respective function and are linked to each other in a manner which takes into account a number of technical applications to be solved, characterised
- in that the function blocks (48 to 56, 84, 104 to 114) are designed in modular system and each comprise an input region (58), function region (62) and output region (60) which can be configured as desired,
- in that by way of data transfer media (66, 68), the function blocks (48 to 56, 84, 104 to 114) are connected to the system management level (70), the automation level (32) and to each other, and
- in that the function of each function block (48 to 56, 84, 104 to 114) can be established in the function regions (62), and the linking of each function block (48 to 56, 84, 104 to 114) to other function blocks (48 to 56, 84, 104 to 114) in accordance with the technical application to be solved can be established in the input regions (58) and output regions (60).

2. Control system according to claim 1,
characterised in that there is provided an operating system, which supports the system management level (70), the control level (46) and the automation level (32) as well as a data transfer between these levels (32, 46, 70).

3. Control system according to claim 1 or 2,
characterised in that there can be established for the input region (58) a data type (86), a connection type (88) and a supply type (92).

4. Control system according to claim 3,
characterised in that there can be established for the output region (60) a data type (86'), a connection type (88'), a buffer type (90') and a disposal type (92').

5. Control system according to one of the claims 3 and 4, characterised in that the function region (62) contains a block program which, in accordance with the technical application to be solved, comprises at least one function record consisting of at least one logic function and/or at least one arithmetic function.

6. Control system according to claim 5,
characterised in that the function records are subprograms of the block program, which subprograms are allocated to a respective processing type (94 to 102).

7. Control system according to claim 6,
characterised in that the processing type (94 to 102) can be specified independently of the function block by means of the operating system.

8. Control system according to one of the claims 2 to 7, characterised in that the function blocks (48 to 56, 84, 104 to 114) each comprise a service interface (64) having operator control functions, which service interface produces a connection of the function block (48 to 56, 84, 104 to 114) to the operating system.

9. Control system according to one of the claims 1 to 8, characterised in that function blocks (104 to 110) can be brought together to form a processing sequence, with the sequence of their function execution being specifiable in accordance with the task to be solved.

10. Control system according to claim 9,
characterised in that the function execution of function blocks (112, 114) which do not belong to a processing sequence can be executed independently.

11. Control system according to one of the claims 1 to 10, characterised in that the operational sequence of the function blocks (48 to 56, 84, 104 to 114) can be controlled by means of the operating system.

12. Control system according to one of the claims 1 to 11, characterised in that there is provided in the system management level (70) a user interface (78) which displays operation-relevant data of the technical installation (2) and by means of which the operating state of the technical installation (2) can be adjusted.

13. Control system according to one of the claims 1 to 12, characterised in that there are provided in the automation level (32) automation blocks (34 to 42), which can be allocated to certain portions (4, 12, 14, 24, 28) of the installation.

## Revendications

1. Système de commande (30) pour une installation technique (2) qui comprend un niveau de commande (46) qui est agencé hiérarchiquement au-dessous d'un niveau de conduite d'exploitation (70) et au-dessus d'un niveau d'automatisation (32) et qui comprend plusieurs modules fonctionnels (48 à 56, 84, 104 à 114) qui traitent selon leur fonction respective des valeurs d'entrée et qui sont combinés entre eux en tenant compte d'un certain nombre d'applications techniques à mettre en oeuvre,
caractérisé par le fait que
- les modules fonctionnels (48 à 56, 84, 104 à 114) ont une structure modulaire et comprennent chacun une zone d'entrée (58), une zone de fonction (62) et une zone de sortie (60) pouvant être conçues comme on le veut,
- les modules fonctionnels (48 à 56, 84, 104 à 114) sont reliés entre eux et au niveau de conduite d'exploitation (70) ainsi qu'au niveau d'automatisation (32) par l'intermédiaire de supports de transfert de données (66, 68) et
- dans les zones de fonction (62), la fonction du module fonctionnel (48 à 56, 84, 104 à 114) considéré et, dans les zones d'entrée (58) et les zones de sortie (60), la combinaison du module fonctionnel (48 à 56, 84, 104 à 114) considéré avec d'autres modules fonctionnels (48 à 56, 84, 104 à 114) peuvent être spécifiées selon l'application technique à mettre en oeuvre.

2. Système de commande selon la revendication 1,
caractérisé par le fait qu'il est prévu un système d'exploitation qui soulage le niveau de conduite d'exploitation (70), le niveau de commande (46) et le niveau d'automatisation (32) ainsi qu'un transfert de données entre ces niveaux (32, 46, 70).

3. Système de commande selon la revendication 1 ou 2,
caractérisé par le fait qu'un type de données (86), un type de liaison (88) et un type d'alimentation (92) peuvent être spécifiés pour la zone d'entrée (58).

4. Système de commande selon la revendication 3,
caractérisé par le fait qu'un type de données (86'), un type de liaison (88'), un type de tampon (90') et un type de délivrance (92') peuvent être spécifiés pour la zone de sortie (60).

5. Système de commande selon l'une des revendications 3 et 4,
caractérisé par le fait que la zone de fonction (62) contient un programme de module qui comprend, selon l'application technique à mettre en oeuvre, au moins un ensemble de fonctions constitué d'au moins une fonction logique et/ou d'au moins une fonction arithmétique.

6. Système de commande selon la revendication 5,
caractérisé par le fait que les ensembles de fonctions sont des sous-programmes du programme de module qui sont associés chacun à un type de traitement (94 à 102).

7. Système de commande selon la revendication 6,
caractérisé par le fait que le type de traitement (94 à 102) peut être prescrit au moyen du système d'exploitation indépendamment du module fonctionnel.

8. Système de commande selon l'une des revendications 2 à 7,
caractérisé par le fait que les modules fonctionnels (48 à 56, 84, 104 à 114) comprennent chacun une interface de service (64), ayant des fonctions de service, qui établit une liaison du module fonctionnel (48 à 56, 84, 104 à 114) au système d'exploitation.

9. Système de commande selon l'une des revendications 1 à 8,
caractérisé par le fait que des modules fonctionnels (104 à 110) peuvent être regroupés en une séquence de traitement, l'ordre d'exécution de leur fonction pouvant être prescrit selon la tâche à mettre en oeuvre.

10. Système de commande selon la revendication 9,
caractérisé par le fait que l'exécution des fonctions de modules fonctionnels (112, 114) qui n'appartiennent pas à une séquence de traitement peut être mise en oeuvre indépendamment.

11. Système de commande selon l'une des revendications 1 à 10,
caractérisé par le fait que l'exécution des modules fonctionnels (48 à 56, 84, 104 à 114) peut être commandée au moyen du système d'exploitation.

12. Système de commande selon l'une des revendications 1 à 11,
caractérisé par le fait qu'il est prévu dans le niveau de conduite d'exploitation (70) une interface utilisateur (78) qui montre des données, déterminantes pour le fonctionnement, de l'installation technique (2) et au moyen de laquelle l'état de fonctionnement de l'installation technique (2) peut être réglé.

13. Système de commande selon l'une des revendications 1 à 12,
caractérisé par le fait qu'il est prévu dans le niveau d'automatisation (32) des modules d'automatisation (34 à 42) qui peuvent être attribués à certaines paries d'installation (4, 12, 14, 24, 28).
